# FASCICULE DE BREVET EUROPEEN

(11) **EP 2 470 410 B1**
(45) Date de publication et mention de la délivrance du brevet: **02.10.2013**
(21) Numéro de dépôt: 10745301.1
(22) Date de dépôt: 22.06.2010
(51) Int. Cl.: B62D 21/12, B62D 21/14, B62D 33/02

(54) **VEHICULE PORTUAIRE MODULAIRE ET EVOLUTIF**
MODULARES UND SKALIERBARES HAFENFAHRZEUG
MODULAR AND SCALEABLE PORT VEHICLE

(30) Priorité: 25.08.2009 FR 0955797
(43) Date de publication de la demande: 04.07.2012
(73) Titulaire: Envision Vehicle Engineering Novasio Technology Event, 70400 Hericourt (FR)
(72) Inventeur: GAUSSIN, Christophe, CH-1093 La Conversion (CH); HECKY, Stéphane, F-90300 Eloie (FR); FENIX, Reginald, F-70400 Champey (FR)
(74) Mandataire: Rhein, Alain
(86) Numéro de dépôt international: PCT/FR2010/051276
(87) Numéro de publication internationale: WO 2011/023868

(56) Documents cités:
- EP-A- 1 621 450
- EP-A- 1 894 772
- FR-A- 2 240 628

## Description

L'invention concerne un module central suspendu de véhicule modulaire et évolutif pour le transport d'une charge constituée d'au moins un conteneur maritime normalisé ISO ou d'une charge de plusieurs tonnes.

L'invention concerne encore un véhicule modulaire et évolutif comportant au moins un tel module central suspendu.

L'invention concerne encore un train de véhicules comportant au moins un tel véhicule modulaire et évolutif.

La présente invention entre dans le domaine de la manutention lourde, c'est-à-dire de charges de plusieurs tonnes au moins, notamment de conteneurs, ou encore de composants lourds et volumineux tels que éléments de navires, travures de ponts, alternateurs, fusées, ou similaires, au niveau d'installations portuaires, aéroportuaires, ferroviaires, routière ou mixtes, ou encore de sites de montagne.

On connaît, par les demandes de brevet FR 04 52208 et FR 07 56921 du même déposant, des architectures de véhicules de transport lourd, qui permettent, en particulier, de transformer un véhicule tracteur en une remorque, ou inversement, ou encore qui sont capables d'intégrer, pour un besoin particulier, des fonctionnalités complémentaires par le montage rapide de modules dédiés, ce qui permet à l'exploitant d'éviter l'immobilisation, en grand nombre, de moyens spéciaux assez peu fréquemment utilisés.

Un autre exemple pertinent au sujet de la demande est représenté par le document FR-A-2240628 qui divulgue un module central suspendu de véhicule modulaire suivant les caractéristiques du préambule de la revendication 1.

Il se pose fréquemment le problème du transport de charges de très grandes dimensions, ou encore de formes très particulières, qui nécessite l'emploi de véhicules de transport dimensionnés en conséquence. On arrive alors au paradoxe de la nécessité d'organiser des convois exceptionnels pour le transport, à vide, de moyens de manutention spécialisés qui seront ensuite utilisés, également sous forme de convoi exceptionnel, pour le transport de la charge marchande. Le problème ne se pose pas qu'en milieu routier, mais bien sur tout site où le cheminement d'un véhicule spécial se heurte à des contraintes de passage au sol, sous des installations fixes ou sous des lignes d'alimentation électrique, ou à des priorités de trafic qui n'autorisent pas l'encombrement de la voie ou du plate au pendant une durée importante. Naturellement, le problème du stockage des véhicules spéciaux se pose avec la même acuité, en raison de leur volume. Tout particulièrement, en milieu portuaire, la surface disponible est comptée, et est affectée en priorité à la charge marchande et aux navires en transit.

Certaines charges à transporter peuvent atteindre des masses très élevées, de plusieurs centaines de tonnes. Des véhicules de transport très fortement dimensionnés, soit par leur capacité d'emport en tonnage, soit par leurs dimensions particulières, sont chroniquement sous-employés et sont difficiles à rentabiliser, ou encore représentent un taux horaire prohibitif. Leur disponibilité sur le site souhaité nécessite aussi, la plupart du temps, un transport exceptionnel hors gabarit, qui est particulièrement long et coûteux.

Des moyens de motorisation particuliers peuvent aussi être nécessaire, en particulier en combinaison de véhicules tracteurs et de véhicules-freins au sein d'un train de véhicules.

Dans une optique de polyvalence et d'autonomie, par exemple au niveau de l'équipement d'un port ou d'un chantier naval, il est souhaitable de pouvoir affecter à de telles tâches des engins de manutention calibrés sur des missions ordinaires, comme le transport de conteneurs, sans surdimensionnement particulier.

L'invention se propose de résoudre ces problèmes de disponibilité et de coût en mettant en oeuvre un dispositif modulaire et évolutif de manutention, permettant de constituer à la demande, par une combinaison judicieuse de modules, le ou les véhicules adéquats pour chaque opération de manutention. Elle offre ainsi l'avantage de permettre l'emploi, pour des charges particulières de fort tonnage ou de dimensions particulières, l'utilisation de modules conçus pour des applications ordinaires de moindre tonnage, et en particulier pour l'emport de conteneurs maritimes de dimensions normalisées ISO, notamment NF ISO 668. Les plus courants de ces conteneurs sont de longueur 20, 30, 40, 45 pieds, parmi les standards connus de 8, 10, 15, 20, 30, 40, 45, 48, 50, 53, voire 60 pieds. Le volume d'un conteneur de 20 pieds sert aujourd'hui d'unité de mesure de comparaison, sous le vocable EVP, ou équivalent 20 pieds. Les charges correspondant à de tels conteneurs peuvent être très élevées, par exemple de l'ordre de 70 tonnes lors de l'emport de deux conteneurs de 20 pieds alignés, la norme NF ISO 668 précisant exactement le tonnage maximal de 34800 kg pour un conteneur de 20 pieds.

A cet effet, l'invention concerne un module central suspendu de véhicule modulaire et évolutif pour le transport d'une charge constituée d'au moins un conteneur maritime normalisé ISO ou d'une charge de plusieurs tonnes, caractérisé par le fait qu'il comporte, de part et d'autre d'au moins une surface de chargement conçue apte à supporter et à maintenir ladite charge, une première extrémité comportant une première surface de jonction d'extrémité, et une seconde extrémité opposée à ladite première extrémité et comportant une seconde surface de jonction d'extrémité symétrique et non parallèle à ladite première surface de jonction d'extrémité, ladite première surface de jonction d'extrémité et ladite seconde surface de jonction d'extrémité étant chacune conçue apte à coopérer de façon complémentaire avec une surface de jonction complémentaire que comporte un module latéral conçu apte à coopérer avec ledit modules central suspendu par assemblage en arc-boutement.

L'invention concerne encore un véhicule modulaire et évolutif comportent au moins un tel module central suspendu, caractérisé par le fait que ce dernier est assemblé, à ladite première extrémité à un premier tel module latéral, et à ladite seconde extrémité à un second tel module latéral, et par le fait qu'au moins ledit premier ou second module latéral est assemblé à des moyens de roulement au sol.

L'invention concerne encore un train de véhicules comportant au moins un tel véhicule modulaire et évolutif.

D'autres caractéristiques et avantages de l'invention ressortiront de la description détaillée qui va suivre des modes de réalisation non limitatifs de l'invention, en référence aux figures annexées dans lesquelles:
- la figure 1 représente, de façon schématisée et en élévation, une panoplie de modules conçus aptes à être combinés pour constituer un véhicule modulaire et évolutif selon l'invention ;
- les figures 2 à 28 représentent, de façon schématisée et en élévation, différents véhicules obtenus par combinaison de tels modules, dont la composition sera explicitée plus en détail dans la suite de la description.

L'invention concerne le domaine de la manutention des charges lourdes, notamment de la manutention en milieu portuaire, et en particulier la manutention de conteneurs normalisés ISO.

L'invention concerne un mode de construction modulaire d'un ou plusieurs véhicules modulaires et évolutifs 100, qui présentent la caractéristique commune d'être réalisés en combinaison de plusieurs modules autour d'un module central suspendu 1. Un tel véhicule modulaire et évolutif 100 est conçu pour le transport d'une charge, ou constituée d'au moins un conteneur maritime normalisé, notamment selon la norme NF ISO 668, ou d'une charge de plusieurs tonnes.

Selon l'invention, ce module central suspendu 1 comporte au moins une surface de chargement 10 conçue apte à supporter et à maintenir la charge. Le module central 1 comporte, de part et d'autre de cette surface de chargement 10, une première extrémité 1A comportant une première surface de jonction d'extrémité 11, et une seconde extrémité 1B opposée à ladite première extrémité 1A et comportant une seconde surface de jonction d'extrémité 12 symétrique et non parallèle à la première surface de jonction d'extrémité 11. La première surface de jonction d'extrémité 11 et la seconde surface de jonction d'extrémité 12 sont chacune conçue apte à coopérer de façon complémentaire avec une surface de jonction complémentaire 23 que comporte un module latéral 2 conçu apte à coopérer avec le module central suspendu 1 par assemblage en arc-boutement.

Selon l'invention, le véhicule modulaire et évolutif 100 comporte au moins un module central suspendu 1 qui est assemblé, à la première extrémité 1A à un premier tel module latéral 2, et à la seconde extrémité 1B à un second tel module latéral 2. De plus, au moins le premier ou le second module latéral 2 est assemblé à des moyens de roulement au sol 30.

Ces moyens de roulement au sol sont assemblés au niveau d'une surface d'appui inférieure 24 que comporte chaque module latéral 2, et que peut aussi comporter le module central 1.

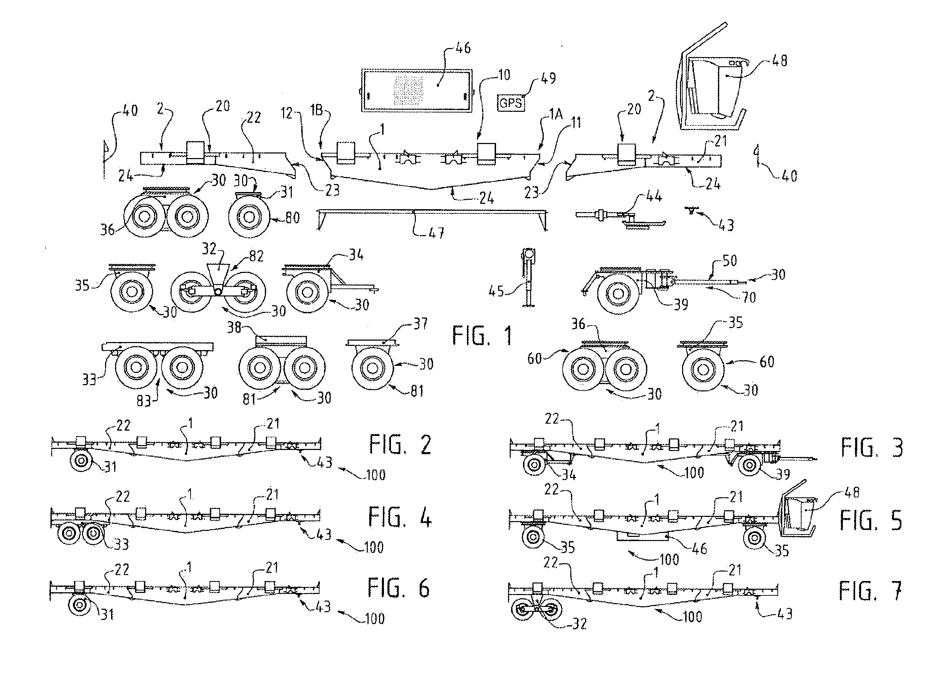

Dans certains des modes de réalisation non limitatifs de l'invention, tels que visibles sur les figures 2 à 28, au moins le premier ou le second module latéral 2 est un module avant 21 qui est conçu apte à porter un pivot d'attelage 43 au/et un timon 50, en particulier dans les combinaisons représentées aux figures 2, 4, 6, 7, 9 et 22, qui représentent un module avant ainsi équipé. Ce module avant 21 est encore apte à porter, dans certaines versions du véhicule 100, des moyens de roulement au sol 30 auxquels il est assemblé, et comporte cette configuration notamment sur les figures 3, 5, 8, 10, 11, 12, 13, 14, 15, 16, 17, 18, 19, 20, 21, 2, 24, 25, 26, 27 et 28.

De façon générale, un kit de boulonnerie est utilisé pour assurer le maintien des différents organes entre eux après leur positionnement relatif, pour leur assemblage avant utilisation. De préférence, les perçages et taraudages réalisés dans les différents modules sont standardisés, ainsi que les boulons et autres éléments d'assemblage utilisés. La conception des différents éléments est faite pour autoriser leur manutention et leur assemblage à l'aide de simples chariots élévateurs, sans nécessairement mobiliser un pont roulant ou une grue. Dans un mode de réalisation particulier, le module central 1 et le module latéral 2 comportent des implantations non représentées sur les figures, telles que des logements ou des prises situées de façon symétrique par rapport à leur centre de gravité, pour autoriser le passage de fourches de chariots élévateurs, ou encore d'élingues. Ces implantations sont ménagées sur les deux côtés des modules, et sont de préférence traversantes, c'est-à-dire réalisées sur toute la largeur des modules, la largeur s'entendant comme étant la direction orthogonale à la longueur selon laquelle ces modules sont préférentiellement assemblés entre eux. Naturellement, ces modules peuvent encore, pour certaines applications de charges volumineuses ou/et lourdes, être conçus pour une juxtaposition latérale, et comportent alors des surfaces d'appui complémentaires les uns aux autre, et des moyens d'assemblage.

Dans les modes de réalisation représentés sur les figures 2 à 28, non limitatifs de l'invention, au moins le premier ou le second module latéral 2, de préférence ce dernier, est un module arrière 22 assemblé à des moyens de roulement au sol 30.

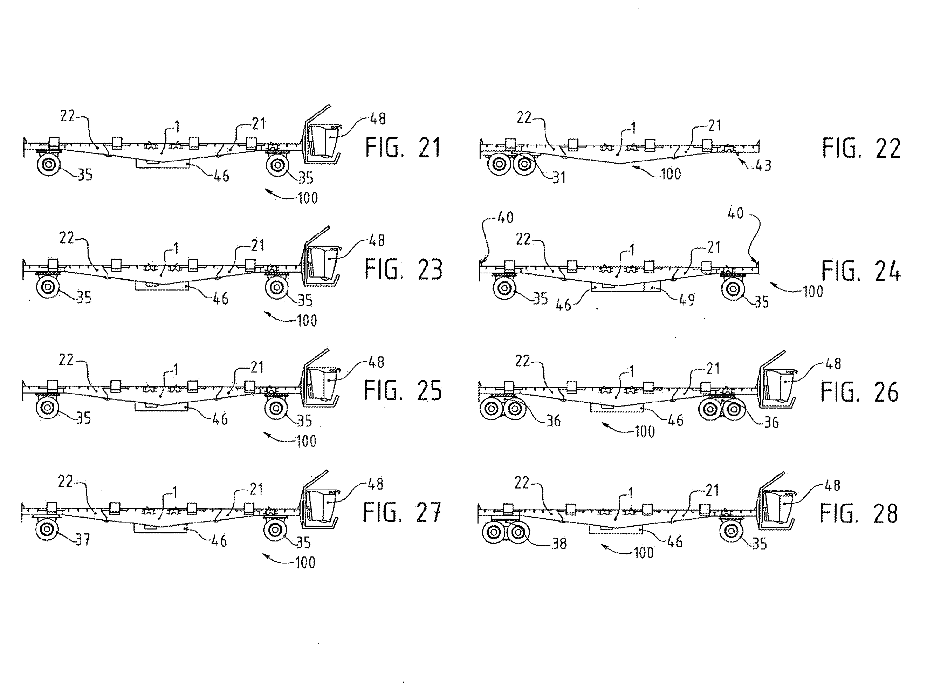

Dans certains modes de réalisation, le module avant 21 est assemblé à des moyens de roulement au sol 30 comportant au moins un train moteur directionnel 60, tel que visible sur les figures 5, 11, 18, 19, 21, 23, 24, 25, 26, 27, 28. Ce train moteur directionnel 60 peut être à simple essieu 35, ou à plusieurs essieux, comme le modèle correspondant à la figure 26, équipé de train moteur directionnel à double essieu 36.

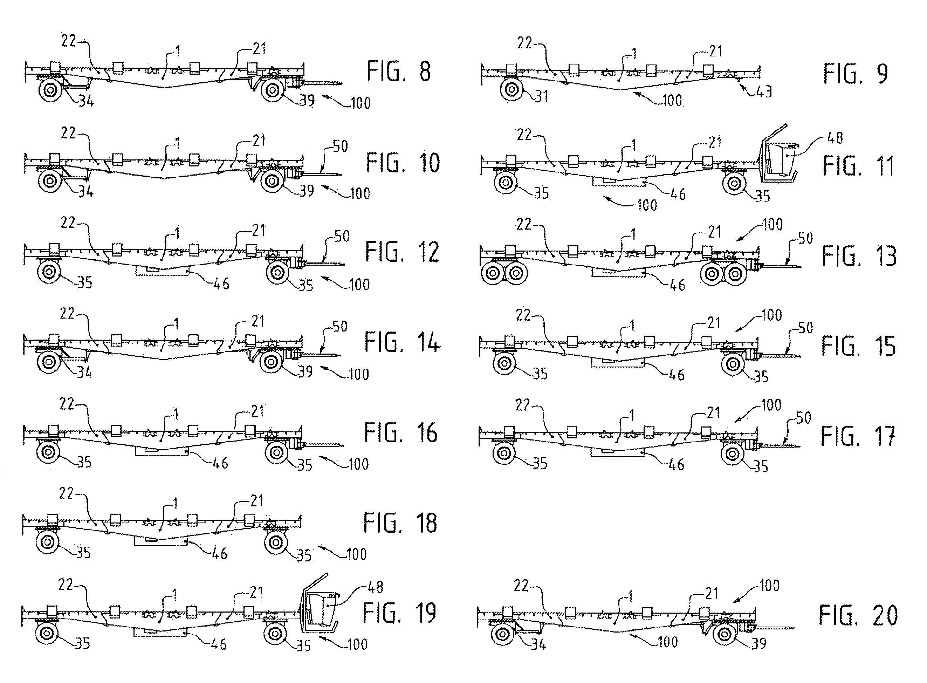

Dans certains modes de réalisation, visibles sur les figures 3, 8, 10, 12, 13, 14, 15, 16, 17, 20, le module avant 21 est assemblé à des moyens de roulement au sol 30 comportant au moins un train suiveur à timon 70. Ce train suiveur à timon 70 peut être à simple essieu 39, ou à plusieurs essieux, comme le modèle correspondant à la figure 13, équipé d'un train suiveur à double essieu. Le train suiveur à timon 70 peut, encore, être aussi moteur, comme dans les modèles des figures 12, 13, et 15. Il comporte au moins un timon 50 d'attelage à un autre véhicule.

L'attelage peut encore être réalisé par un pivot d'attelage 44.

Dans certains modes de réalisation, le module arrière 22 est assemblé à des moyens de roulement au sol 30 comportant au moins un train moteur directionnel 60.

Dans certains modes de réalisation visibles sur les figures 3, 8, 10, 14, 20, le module arrière 22 est assemblé à des moyens de roulement au sol 30 comportant au moins un train suiveur à timon 70. Ce dernier est préférentiellement articulé, par une liaison palonnée, par l'intermédiaire d'une transmission d'essieu 47 réalisée en particulier sous la forme d'une barre de jonction entre palonniers, avec un moyen directionnel que comporte alors le module avant 21, soit sous la forme de moyens directionnels propres à ce dernier, comme un train moteur directionnel 60, soit sous la forme d'un autre train suiveur 70. Ce train suiveur arrière à timon peut notamment être un simple essieu suiveur « Multi Trailer System » ou « MTS » 34. De façon préférée, ce dernier est combiné à un essieu suiveur avant 39, ou encore à un essieu avant directionnel simple 35 ou double 36, par l'intermédiaire de la barre de transmission d'essieu 47.

La transmission d'essieu 47, pour le mode de direction des essieux suiveurs, peut aussi être réalisée par d'autres moyens qu'une barre de jonction. On peut ainsi avantageusement équiper chaque module d'un éléments de commande ou/et de réception d'un système d'asservissement, notamment d'un système d'asservissement électro-hydraulique, ou d'un système d'asservissement par servo-mécanisme à commande électrique, ou similaire. Chaque module ainsi équipé est alors, avantageusement, équipé de moyens de couplage à des moyens de fourniture d'énergie, ou est équipé de moyens de stockage d'énergie propres, tels que batterie électrique, accumulateur hydraulique ou pneumatique. Ces moyens de stockage d'énergie propre comportent eux aussi des moyens de couplage à des moyens de fourniture d'énergie, embarqués sur le module lui-même ou sur un module mitoyen, ou encore externes au véhicule constitué par la combinaison des modules.

On comprend que, de façon plus générale, tout module selon l'invention peut ainsi être équipé de tels moyens de couplage à des moyens de fourniture d'énergie, ou/et de tels moyens de stockage d'énergie, pour l'alimentation d'appareillages particuliers.

Dans certains modes particuliers de réalisation, le module arrière 22 est assemblé à des moyens de roulement au sol 30 comportant au moins un train fixe 80 visible sur les figures 2, 6, 9, 27, 28. Ce train fixe 80 peut être constitué d'un simple essieu fixe 31, ou d'un essieu multiple fixe non représenté sur les figures. Le train fixe 80 peut, encore, constitué un train moteur fixe 81, il peut alors comporter un simple essieu moteur fixe 37, ou un double essieu moteur fixe 38, ou un essieu multiple moteur fixe non représenté sur les figures.

Dans certains modes particuliers de réalisation, tel que visible sur la figure 7, le module arrière 22 est assemblé à des moyens de roulement au sol 30 comportant au moins un train à bascule 82. Celui-ci est avantageusement réalisé sous la forme d'un double demi-essieu à bascule 32.

Dans certains modes particuliers de réalisation, tels que visibles sur les figures 4 et 22, le module arrière 22 est assemblé à des moyens de roulement au sol 30 comportant au moins un train suspendu 83. Celui-ci est de préférence réalisé sous la forme d'un double essieu suspendu 33.

Dans certains modes de réalisation, le module arrière 22 est assemblé à des moyens de roulement au sol 30 comportant au moins un train moteur fixe 81, tel que visible sur la figure 27 dont le train fixe 80 est un train fixe moteur à simple essieu 37, ou sur la figure 28 dont le train fixe 80 est un train fixe moteur à double essieu 38.

Dans certains modes de réalisation où au moins l'un des trains est moteur, le train moteur directionnel 60 ou le train moteur fixe 81, selon le cas, est avantageusement entraîné, par l'intermédiaire de moyens de transmission de force motrice, par au moins un module caisson de moyens moteurs 46. Celui-ci est conçu apte à être embarqué par un des modules constituant le véhicule 100 considéré, c'est-à-dire le module central suspendu 1, tel que visible sur les figures 5, 12, 13, 15, 16, 17, 18, 19, 21, 23, 24, 25, 26, 27, 28, ou encore par un des modules latéraux 2. Naturellement, les moyens moteurs peuvent être répartis sur plusieurs de ces modules : l'emport de moyens moteurs sur un module latéral mmi d'un train moteur rend ce module directement autonome et prêt à l'emploi, et permet de constituer instantanément un automoteur en combinaison avec un module central 1 et un autre module latéral 2 non pourvus de moyens moteurs.

Dans certains préférés modes de réalisation, le module central suspendu 1 ou/et au moins un des modules latéraux 2 comporte un système de guidage. Celui-ci peut consister en un module guide longitudinal 40 pour son positionnement précis par rapport à des références externes. En particulier le système de guidage est conçu pour un accostage précis par rapport à une charge, ou encore pour un jumelage avec d'autres véhicules, selon la demande de brevet française FR 08 58657 du même déposant.

Dans certains modes de réalisation, le module central suspendu 1 ou/et au moins un des modules latéraux 2 comporte un système de guidage comportant un système de pilotage automatique 49 pour son positionnement précis par rapport à des références externes, ou constitué par un tel système. Ce système de pilotage automatique 40 peut, notamment, être choisi de type « GPS ».

Dans certains modes de réalisation, le module central suspendu 1 ou/et au moins un des modules latéraux 2 comporte une cabine de pilotage 48. Celle-ci est de préférence constituée aussi par un module comportant des moyens de positionnement et de fixation conçus aptes à coopérer avec des moyens de positionnement et de fixation complémentaires que comporte le module central suspendu 1 ou, de préférence, un des modules latéraux 2, voire les deux.

D'autres modules peuvent encore être combinés avec ceux décrits ci-dessus, comme une béquille 45 pour une remorque ou une semi-remarque.

L'ensemble des figures illustre la flexibilité d'utilisation de l'invention, en particulier pour les applications portuaires auxquelles font référence ces figures. Ainsi, par modification des équipements emportés :
- la semi-remorque à simple essieu fixe 31 et à pivot d'attelage 43 de la figure 2 est transformable en une remorque à simples essieux « MTS » suiveur 34 et à timon 39 selon la figure 3 ;
- la semi-remorque à double essieu suspendu 33 et à pivot d'attelage 43 de la figure 4 est transformable en un automoteur à cabine 48 à simples essieux moteurs directionnels 35 selon la figure 5 ;
- la semi-remorque à simple essieu fixe 31 et à pivot d'attelage 43 de la figure 6 est transformable en celle à double demi-essieu à bascule 32 et à pivot d'attelage 43 de la figure 7 ;
- la remorque à simples essieux « MTS » suiveur 34 et à timon 39 de la figure 8 est transformable en une semi-remorque à simple essieu fixe 31 et à pivot d'attelage 43 selon la figure 9 ;
- la remorque à simples essieux « MTS » suiveur 34 et à timon 39 de la figure 10 est transformable en un automoteur à cabine 48 à simples essieux moteurs directionnels 35 selon la figure 11 ;
- la remorque motrice à simples essieux moteurs directionnels 35, et à timon 50, de la figure 12 est transformable en une remorque avec un double essieu moteur directionnel 36 et un train suiveur à timon 70 à double essieu selon la figure 13 ;
- la remorque à simples essieux « MTS » suiveur 34 et à timon 39 de la figure 14 est transformable en une remorque motrice à simples essieux moteurs directionnels 35 selon la figure 15 ;
- la remorque motrice à simples essieux moteurs directionnels 35 de la figure 16 est transformable en une remorque motrice à simple essieu moteur 35 et à simple essieu suiveur à timon 39 selon la figure 17 ;
- la remorque motrice à simples essieux moteurs directionnels 35 de la figure 16 est transformable en une remorque motorisée sans cabine, avec l'équipement d'un système de guidage, selon la figure 18;
- l'automoteur à cabine 48 et à simples essieux moteurs directionnels 35 de la figure 19, est transformable en une remorque non motorisée à simples essieux « MTS » suiveur 34 et à timon 39 selon la figure 20 ;
- l'automoteur à cabine 48 et à simples essieux moteurs directionnels de la figure 21 est transformable en une semi-remorque à double essieu suspendu 33 et à pivot d'attelage 43 selon la figure 22 ;
- l'automoteur à cabine 48 et à simples essieux moteurs directionnels 35 de la figure 23 est transformable en une remorque motorisée sans cabine à simples essieux moteurs directionnels 35 avec système de guidage 40 selon la figure 24 ;
- l'automoteur à cabine 48 et à simples essieux moteurs directionnels 35 de la figure 25 est transformable en un automoteur à cabine 48 et à doubles essieux directionnels 36 selon la figure 26 ;
- l'automoteur à cabine 48 avec un simple essieu moteur fixe 35 et un simple essieu moteur directionnel 37 de la figure 27 est transformable en un automoteur à cabine 48 avec un double essieu moteur fixe 38 et un essieu moteur directionnel 35 selon la figure 28.

L'invention concerne encore, non représenté sur les figures, un train de véhicules, c'est-à-dire un ensemble composés de plusieurs véhicules attelés l'un à l'autre, à ne pas confondre avec les trains moteurs et suiveurs cités plus haut, qui, eux, sont des organes constitutifs des véhicules. Un tel train de véhicules comporte au moins un véhicule modulaire et évolutif 100 tel que décrit ci-dessus.

## Revendications

1. Véhicule modulaire et évolutif (100) comportant au moins un module central suspendu (1) pour le transport d'une charge constituée d'au moins un conteneur maritime normalisé ISO ou d'une charge de plusieurs tonnes, comportant de part et d'autre d'au moins une surface de chargement (10) conçue apte à supporter et à maintenir ladite charge, une première extrémité (1A) comportant une première surface de jonction d'extrémité (11), et une seconde extrémité (1B) opposée à ladite première extrémité (1A) et comportant une seconde surface de jonction d'extrémité (12) symétrique et non parallèle à ladite première surface de jonction d' extrémité, ladite première surface de jonction d'extrémité (11) et ladite seconde surface de jonction d'extrémité (12) étant chacune conçue apte à coopérer de façon complémentaire avec une surface de jonction complémentaire (23) que comporte un module latéral (2) conçu apte à coopérer avec ledit module central suspendu (1) par assemblage en arc-boutement, **caractérisé par le fait que** ledit module (1) est assemblé, à ladite première extrémité (1A) à un premier tel module latéral (2), et à ladite seconde extrémité (1B) à un second tel module latéral (2), et **par le fait qu'**au moins ledit premier ou second module latéral (2) est assemblé à des moyens de roulement au sol (30), et en ce qu'au moins ledit premier module latéral (2) est un module avant (21) comportant un pivot d'attelage (43) ou/et un timon (50), et en ce que ledit second module latéral (2) est un module arrière (22) assemblé à des moyens de roulement au sol (30).

2. Véhicule modulaire et évolutif (100) selon la revendication 1, **caractérisé par le fait que** ledit module avant (21) est assemblé à des moyens de roulement au sol (30) comportant au moins un train moteur directionnel (60).

3. Véhicule modulaire et évolutif (100) selon la revendication 1, **caractérisé par le fait que** ledit module avant (21) est assemblé à des moyens de roulement au sol (30) comportant au moins un train suiveur à timon (70).

4. Véhicule modulaire et évolutif (100) selon la revendication 1, **caractérisé par le fait que** ledit module arrière (22) est assemblé à des moyens de roulement au sol (30) comportant au moins un train moteur directionnel (60).

5. Véhicule modulaire et évolutif (100) selon la revendication 1, **caractérisé par le fait que** ledit module arrière (22) est assemblé à des moyens de roulement au sol (30) comportant au moins un train suiveur à timon (70).

6. Véhicule modulaire et évolutif (100) selon la revendication 1, **caractérisé par le fait que** ledit module arrière (22) est assemblé à des moyens de roulement au sol (30) comportant au moins un train fixe (80) ou un train à bascule (82) ou un train suspendu (83).

7. Véhicule modulaire et évolutif (100) selon la revendication 1, **caractérisé par le fait que** ledit module arrière (22) est assemblé à des moyens de roulement au sol (30) comportant au moins un train moteur fixe (81).

8. Véhicule modulaire et évolutif (100) selon la revendication 1, **caractérisé par le fait que** ledit module avant (21) est assemblé à des moyens de roulement au sol (30) comportant au moins un train suiveur à timon (70) et que ledit module arrière (22) est assemblé à des moyens de roulement au sol (30) comportant au moins un train suiveur à timon (70), ledit train suiveur à timon (70) dudit module avant (21) étant articulé par l'intermédiaire d'au moins un moyen de transmission d'essieu (47) audit train suiveur à timon (70) dudit module arrière (22).

9. Véhicule modulaire et évolutif (100) selon la revendication 2, **caractérisé par le fait que** ledit train moteur directionnel (60) est entraîné, par l'intermédiaire de moyens de transmission de force motrice, par au moins un module caisson de moyens moteurs (46) conçu apte à être embarqué par ledit module central suspendu (1) ou par un desdits module latéraux (2).

10. Véhicule modulaire et évolutif (100) selon la revendication 7, ledit train moteur fixe (81) est entraîné, par l'intermédiaire de moyens de transmission de force motrice, par au moins un module caisson de moyens moteurs (46) conçu apte à être embarqué par ledit module central suspendu (1) ou par un desdits modules latéraux (2).

11. Véhicule modulaire et évolutif (100) selon la revendication 1, **caractérisé par le fait que** ledit module central suspendu (1) ou/et au moins un desdits modules latéraux (2) comporte un module guide longitudinal (40) pour son positionnement précis par rapport à des références externes.

12. Véhicule modulaire et évolutif (100) selon la revendication 1, **caractérisé par le fait que** ledit module central suspendu (1) ou/et au moins un desdits modules latéraux (2) comporte un système de pilotage automatique (49) pour son positionnement précis par rapport à des références externes.

13. Véhicule modulaire et évolutif (100) selon la revendication 1, **caractérisé par le fait que** ledit module central suspendu (1) ou/et au moins un desdits modules latéraux (2) comporte une cabine de pilotage (48).

## Patentansprüche

1. Modulares und ausbaufähiges Fahrzeug (100), umfassend wenigstens ein aufgehängtes Zentralmodul (1) für die Beförderung einer Last, die aus wenigstens einem ISO-normierten See-Container oder aus einer Last von mehreren Tonnen besteht, umfassend beiderseits von wenigstens einer Ladungsfläche (10), die geeignet vorgesehen ist, um die besagte Last zu tragen und zu halten, ein erstes Ende (1A), das eine erste Endverbindungsfläche (11) umfasst, und ein zweites, dem besagten ersten Ende (1A) gegenüberliegendes Ende (1B), das eine zweite, symmetrische und nicht parallel zur besagten ersten Endverbindungsfläche verlaufende Endverbindungsfläche (12) umfasst, wobei die besagte erste Endverbindungsfläche (11) und die besagte zweite Endverbindungsfläche (12) jeweils geeignet vorgesehen sind, um auf ergänzende Art und Weise mit einer ergänzenden Verbindungsfläche (23) zusammenzuwirken, die von einem Seitenmodul (2) umfasst ist, das geeignet vorgesehen ist, um durch Abstützung mit dem besagten aufgehängten Zentralmodul (1) zusammenzuwirken, **dadurch gekennzeichnet, dass** das besagte Modul (1) an dem besagten ersten Ende (1A) mit einem ersten solchen Seitenmodul (2) und dem besagten zweiten Ende (1B) mit einem zweiten solchen Seitenmodul (2) verbunden ist, und dadurch, dass wenigstens das besagte erste oder zweite Seitenmodul (2) mit Mitteln zum Fahren auf dem Boden (30) verbunden ist und dadurch, dass wenigstens das besagte erste Seitenmodul (2) ein vorderes Modul (21) ist, das ein Kopplungsschwenkachse (43) oder/und eine Kopplungsstange (50) umfasst, und dadurch, dass das besagte zweite Seitenmodul (2) ein hinteres Modul (22) ist, das mit Mitteln zum Fahren auf dem Boden (30) verbunden ist.

2. Modulares und ausbaufähiges Fahrzeug (100) nach Anspruch 1, **dadurch gekennzeichnet, dass** das besagte vordere Modul (21)) mit Mitteln zum Fahren auf dem Boden (30) verbunden ist, die wenigstens eine direktionale Antriebachse (60) umfassen.

3. Modulares und ausbaufähiges Fahrzeug (100) nach Anspruch 1, **dadurch gekennzeichnet, dass** das besagte vordere Modul (21) mit Mitteln zum Fahren auf dem Boden (30) verbunden ist, die wenigstens eine Folgeachse mit Kopplungsstange (70) umfassen.

4. Modulares und ausbaufähiges Fahrzeug (100) nach Anspruch 1, **dadurch gekennzeichnet, dass** das besagte hintere Modul (22) mit Mitteln zum Fahren auf dem Boden (30) verbunden ist, die wenigstens eine direktionale Antriebachse (60) umfassen.

5. Modulares und ausbaufähiges Fahrzeug (100) nach Anspruch 1, **dadurch gekennzeichnet, dass** das besagte hintere Modul (22) mit Mitteln zum Fahren auf dem Boden (30) verbunden ist, die wenigstens eine Folgeachse mit Kopplungsstange (70) umfassen.

6. Modulares und ausbaufähiges Fahrzeug (100) nach Anspruch 1, **dadurch gekennzeichnet, dass** das besagte hintere Modul (22) mit Mitteln zum Fahren auf dem Boden (30) verbunden ist, die wenigstens eine feste Achse (80) oder eine Achse mit Schwenkhebel (82) oder eine aufgehängte Achse (83) umfassen.

7. Modulares und ausbaufähiges Fahrzeug (100) nach Anspruch 1, **dadurch gekennzeichnet, dass** das besagte hintere Modul (22) mit Mitteln zum Fahren auf dem Boden (30) verbunden ist, die wenigstens eine feste Antriebachse (81) umfassen.

8. Modulares und ausbaufähiges Fahrzeug (100) nach Anspruch 1, **dadurch gekennzeichnet, dass** das besagte vordere Modul (21) mit Mitteln zum Fahren auf dem Boden (30) verbunden ist, die wenigstens eine Folgeachse mit Kopplungsstange (70) umfassen und dadurch, dass das besagte hintere Modul (22) mit Mitteln zum Fahren auf dem Boden (30) verbunden ist, die wenigstens eine Folgeachse mit Kopplungsstange (70) umfassen, wobei die besagte Folgeachse mit Kopplungsstange (70) des besagten vorderen Moduls (21) über wenigstens ein Übertragungsachsenmittel (47) gelenkig mit der besagten Folgeachse mit Kopplungsstange (70) des besagten hinteren Moduls (22) verbunden ist.

9. Modulares und ausbaufähiges Fahrzeug (100) nach Anspruch 2, **dadurch gekennzeichnet, dass** die besagte direktionale Antriebachse (60) über Motorkraftübertragungsmittel von wenigstens einem Motor-Kastenmodul (46) angetrieben wird, das geeignet vorgesehen ist, um auf dem besagten aufgehängten Zentralmodul (1) oder auf einem der besagten Seitenmodule (2) getragen zu werden.

10. Modulares und ausbaufähiges Fahrzeug (100) nach Anspruch 7, **dadurch gekennzeichnet, dass** die besagte feste Antriebachse (81) über Motorkraftübertragungsmittel von wenigstens einem Motor-Kastenmodul (46) angetrieben wird, das geeignet vorgesehen ist, um auf dem besagten aufgehängten Zentralmodul (1) oder auf einem der besagten Seitenmodule (2) getragen zu werden.

11. Modulares und ausbaufähiges Fahrzeug (100) nach Anspruch 1, **dadurch gekennzeichnet, dass** das besagte aufgehängte Zentralmodul (1) oder/und wenigstens eines der besagten Seitenmodule (2) ein Längsführungsmodul (40) zwecks seiner genauen Positionierung bezüglich externer Bezugspunkte umfasst.

12. Modulares und ausbaufähiges Fahrzeug (100) nach Anspruch 1, **dadurch gekennzeichnet, dass** das besagte aufgehängte Zentralmodul (1) oder/und wenigstens eines der besagten Seitenmodule (2) ein automatisches Steuersystem (49) zwecks seiner genauen Positionierung bezüglich externer Bezugspunkte umfasst.

13. Modulares und ausbaufähiges Fahrzeug (100) nach Anspruch 1, **dadurch gekennzeichnet, dass** das besagte aufgehängte Zentralmodul (1) oder/und wenigstens eines der besagten Seitenmodule (2) ein Fahrerraum (48) umfasst.

## Claims

1. Modular and extendable vehicle (100) including at least one suspended central module (1) for the transport of a load formed of at least one ISO-standardized sea-going container or of a load of several tons, including, on both sides of at least one loading surface (10) designed capable of supporting and maintaining said load, a first end (1A) including a first end joining surface (11), and a second end (1B) opposite said first end (1A) and including a second end joining surface (12) symmetrical and non-parallel to said first end joining surface, said first end joining surface (11) and said second end joining surface (12) being each designed capable of cooperating in a complementary way with a complementary joining surface (23) a side module (2) designed capable of cooperating with said suspended central module (1) by buttressing assembly includes, wherein said module (1) is assembled, at said first end (1A), with a first such side module (2) and, at said second end (1B), with a second such side module (2), and wherein at least said first or second side module (2) is assembled with means for rolling on the ground (30), and wherein at least said first side module (2) is a front module (21) including a coupling pivot (43) or/and a coupling bar (50), and wherein said second side module (2) is a rear module (22) assembled with means for rolling on the ground (30).

2. Modular and extendable vehicle (100) according to claim 1, wherein said front module (21) is assembled with means for rolling on the ground (30) including at least one directional drive axle (60).

3. Modular and extendable vehicle (100) according to claim 1, wherein said front module (21) is assembled with means for rolling on the ground (30) including at least one follower axle with coupling bar (70).

4. Modular and extendable vehicle (100) according to claim 1, wherein said rear module (22) is assembled with means for rolling on the ground (30) including at least one directional drive axle (60).

5. Modular and extendable vehicle (100) according to claim 1, wherein said rear module (22) is assembled with means for rolling on the ground (30) including at least one follower axle with coupling bar (70).

6. Modular and extendable vehicle (100) according to claim 1, wherein said rear module (22) is assembled with means for rolling on the ground (30) including at least one fixed axle (80) or one axle with lever (82) or one suspended axle (83).

7. Modular and extendable vehicle (100) according to claim 1, wherein said rear module (22) is assembled with means for rolling on the ground (30) including at least one fixed drive axle (81).

8. Modular and extendable vehicle (100) according to claim 1, wherein said front module (21) is assembled with means for rolling on the ground (30) including at least one follower axle with coupling bar (70) and wherein said rear module (22) is assembled with means for rolling on the ground (30) including at least one follower axle with coupling bar (70), said follower axle with coupling bar (70) of said front module (21) being articulated through at least one axle transmission means (47) to said follower axle with coupling bar (70) of said rear module (22).

9. Modular and extendable vehicle (100) according to claim 2, wherein said directional drive axle (60) is driven, through power transmission means, by at least one motor-means box module (46) designed capable of being carried on said suspended central module (1) or on one of said side modules (2).

10. Modular and extendable vehicle (100) according to claim 7, wherein said fixed drive axle (81) is driven, through power transmission means, by at least one motor-means box module (46) designed capable of being carried on said suspended central module (1) or on one of said side modules (2).

11. Modular and extendable vehicle (100) according to claim 1, wherein said suspended central module (1) or/and at least one of said side modules (2) includes a longitudinal guiding module (40) for its accurate positioning with respect to external references.

12. Modular and extendable vehicle (100) according to claim 1, wherein said suspended central module (1) or/and at least one of said side modules (2) includes an automatic piloting system (49) for its accurate positioning with respect to external references.

13. Modular and extendable vehicle (100) according to claim 1, wherein said suspended central module (1) or/and at least one of said side modules (2) includes a driver's cabin (48).
